(19) Europäisches Patentamt
European Patent Office
Office européen des brevets

(11) **EP 2 632 841 B1**

(12) **EUROPÄISCHE PATENTSCHRIFT**

(45) Veröffentlichungstag und Bekanntmachung des Hinweises auf die Patenterteilung:
**17.12.2014  Patentblatt 2014/51**

(51) Int Cl.:
***B66B 13/14*** *(2006.01)*   ***E05F 15/14*** *(2006.01)*
***G01B 5/14*** *(2006.01)*

(21) Anmeldenummer: **11808628.9**

(22) Anmeldetag: **21.12.2011**

(86) Internationale Anmeldenummer:
**PCT/EP2011/073561**

(87) Internationale Veröffentlichungsnummer:
**WO 2012/089580 (05.07.2012 Gazette 2012/27)**

(54) **ABSOLUTPOSITIONSBESTIMMUNG BEI ANTRIEBSSYSTEMEN**

DETERMINING ABSOLUTE POSITION IN DRIVE SYSTEMS

DÉTERMINATION D'UNE POSITION ABSOLUE POUR DES SYSTÈMES D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.12.2010  DE 102010056467**

(43) Veröffentlichungstag der Anmeldung:
**04.09.2013  Patentblatt 2013/36**

(73) Patentinhaber: **Siemens Aktiengesellschaft**
**80333 München (DE)**

(72) Erfinder:
  • **GUTZMER, Marcus**
    **30827 Garbsen (DE)**
  • **KRAUSE, Uwe**
    **30982 Pattensen (DE)**
  • **NOLTE, Uwe**
    **30890 Barsinghausen (DE)**

(74) Vertreter: **Wolff, Harry**
**Siemens AG**
**Postfach 22 16 34**
**80506 München (DE)**

(56) Entgegenhaltungen:
**EP-A2- 1 894 877    WO-A1-2009/066492**
**DE-A1-102009 042 800    US-A1- 2010 248 591**

EP 2 632 841 B1

**Beschreibung**

Die Erfindung betrifft ein Verfahren zur Ermittlung einer Position zumindest eines mittels eines Antriebsriemens einer Antriebseinheit bewegbaren Elementes. Die Erfindung betrifft ferner ein System aus einer Antriebseinheit mit einer Steuerung, einem Antriebsriemen und einem bewegbaren Element; sie betrifft zudem ein Programm zum Ablauf in einer genannten Steuerung.

Ein derartiges Verfahren, System und Programm kommt überall dort zum Einsatz, wo für die Ansteuerung der Antriebseinheit (wobei die Steuerung auch in die Antriebseinheit integriert sein kann), die Position des zu bewegenden Elementes - beispielsweise eine automatisch betätigte Tür - bekannt sein muss, da die Ansteuerung von Aktoren oftmals in Abhängigkeit der aktuellen Position (von eben z.B. einer motorisch betriebenen Aufzugstür) erfolgen muss.

Kommt dann ein Inkrementalgeber zum Einsatz, so ist nach einem Spannungsausfall immer erst eine Initialisierungsfahrt erforderlich, um mindestens eine Endposition zu bestimmen. Typischerweise kommen hier Absolutwertgeber zum Einsatz, die die Position auch über mehrere Umdrehungen (Multiturn) eindeutig erfassen. Eine weitere Möglichkeit ist die Abstandsmessung per Ultraschall. Es sind aber auch Verfahren bekannt, die eine inkrementelle Erfassung auch bei Spannungsausfall weiterführen, so dass keine Inkremente verloren gehen.

Weit verbreiteter Stand der Technik ist der Einsatz von Inkrementalgebern oder Hall-Gebern auf der Motorwelle des Antriebssystems. Hierbei wirkt sich der inkrementelle Ansatz als nachteilhaft aus, da hierbei immer von einer vorher bekannten Position aus "gerechnet" wird. Ferner ist der Encoder üblicherweise ein optischer Encoder, der nach Abschalten der Versorgungsspannung das Sensorsignal verliert. Bei Absolutgebern ist zwar nach neuem "Netz-Ein" eine Absolutposition des Rotorwinkels vorhanden, diese entspricht allerdings meist nicht der Position des bewegbaren Elementes, da zum Beispiel bei einer automatisch betätigten Tür bei einem Durchfahren der gesamten Türdistanz diese Absolutposition mehrfach vorhanden ist. Um dies zu umgehen, gibt es bisher prinzipiell mehrere Lösungen:

1. Versorgung des Sensors und der Auswerteelektronik für den Zeitbereich, in welchem die Stromversorgung unterbrochen ist. Dies kann, wenn ein langer Überbrückungszeitraum gewünscht ist, sehr aufwendig sein.
2. Mechanisch speicherndes System, z.B. über Zahnräder und ggf. mehrere Sensoren an den Achsen wird ein so genannter Multiturn-Encoder ausgebildet, der die gesamte mögliche - z.B. - Türstrecke als absolutes Sensorsignal abbildet.
3. Erfassung anhand eines Drahtseiles mit einem magnetostriktiven Messprinzip. Dieses ist üblicherweise bei der Erfassung der Fahrkorbposition (bei Auf- und Abwärtsfahrt) von Aufzügen eingesetzt.
4. Erfassung linearer Positionen anhand eines Codestreifens (optisch oder magnetisch o.ä.).

DE 10 2009 042 800 A offenbart ein Verfahren zur Ermittlung einer Position eines mittels eines Antriebsriemens einer Antriebseinheit bewegbaren Elementes, wobei ein Entfernungsmesser als Sensor eingesetzt wird.

Der Erfindung liegt die Aufgabe zugrunde, eine Absolutposition eines durch ein Antriebssystem bewegbaren Elementes in einer einfachen Art und Weise zu bestimmen.

Diese Aufgabe wird gelöst durch ein Verfahren zur Ermittlung einer Position zumindest eines mittels eines Antriebsriemens einer Antriebseinheit bewegbaren Elementes, wobei der Antriebsriemen über ein Messintervall gedehnt wird und eine dafür benötigte Kraft über einen Wirkungsgrad der Antriebseinheit bestimmt wird, wobei aus dem Messintervall und der Kraft sowie einem Elastizitätsmodul und einem Querschnitt eine wirksame Länge des Antriebsriemens bestimmt wird und wobei aus der wirksamen Länge die Position bestimmt wird.

Die Aufgabe wird weiter gelöst durch ein System und ein Programm mit den in Anspruch 5 bzw. 6 angegebenen Merkmalen.

Die Bestimmung der Absolutposition des Antriebs (bzw. des bewegbaren Elementes) erfolgt mithilfe der Messung der Federkonstanten des Antriebsriemens, für die gilt:

$$D = \frac{\Delta F}{\Delta s}$$

(Quotient aus Kraftänderung und Wegänderung).

Das Elastizitätsmodul des Riemens stellt eine Werkstoffkonstante dar und kann im Einsatzbereich normalerweise als konstant angesehen werden. Für den Zusammenhang von Elastizitätsmodul und Federkonstante gilt:

$$D = \frac{EA}{l}$$

(Elastizitätsmodul multipliziert mit dem Querschnitt geteilt durch die Länge).

Damit ist die Kraft, die benötigt wird, den Riemen um einen bestimmten Weg zu spannen bzw. zu dehnen, umgekehrt proportional zur wirksamen Riemenlänge, die sich also wie folgt bestimmen lässt:

$$l = EA \frac{\Delta s}{\Delta F}.$$

Ein wesentlicher Punkt dabei ist, dass die Last (das bewegbare Element), die durch den Riemen angetrieben wird, sich nicht oder nur so wenig bewegt, dass es keinen Einfluss auf das Ergebnis hat, sofern man die Masse nicht kennt. Falls aber die Masse der Last bekannt ist, kann dieser Einfluss leicht herausgerechnet werden.

Auch muss sich der Riemen soweit spannen lassen, dass sich eine messbare Strecke ergibt, und die träge Masse des Riemens muss sehr deutlich unter der der Last liegen. Und schließlich muss der Wirkungsgrad des Antriebs relativ gut bekannt oder vorhersagbar sein, damit man einen verlässlichen Wert für die wirksame Kraft bekommt.

Aus der wirksamen Länge 1 ergibt sich die Absolutposition des bewegbaren Elementes entweder unmittelbar als Abstand zwischen Antriebseinheit und Last oder mittelbar durch einen Offset-Wert, der die konkrete Einbausituation berücksichtigt; im Falle einer Tür oder zweier Türflügel also beispielsweise "geschlossen", "20 cm offen" oder "offen" angibt, d.h. es kann z.B. bei einer kritischen Länge von 60 cm die Geschlossen-Position vorliegen.

Diesen Wert sowie das Produkt aus Elastizitätsmodul und Querschnitt legt man vorteilhafterweise in einem nonvolatilen Speicher ab und kann künftig durch eine einmalige Messung direkt nach dem Einschalten (PowerOn) die Position der Last bestimmen.

Mit der erfindungsgemäßen Lösung wird damit die sofortige Bestimmung der Position ermöglicht, wobei die bislang oft übliche Initialisierungsfahrt obsolet wird. Dabei wird die Elastizitätseigenschaft einer konstruktiv notwendigen Komponente genutzt, um hieraus eine Positionsinformation der Last zu gewinnen, ohne dafür zusätzliche Sensoren verwenden zu müssen.

In einer vorteilhaften Form der Ausgestaltung wird der Antriebsriemen vorgespannt. In einer weiteren vorteilhaften Ausführungsform wird das bewegbare Element vor der Dehnung des Antriebsriemens auf eine gleichmäßige Geschwindigkeit gebracht. Dadurch, dass man die Last vorher auf eine kleine Geschwindigkeit bringt oder den Antriebsriemen vorspannt (falls man sich in einer Endposition befindet oder blockiert ist), kann die Messgenauigkeit gesteigert werden und vorteilhaft das Messintervall klein gehalten werden. Dadurch vermeidet man Fehler aufgrund von Spiel im Antriebsweg oder beschleunigten Bewegungen der Last.

In einer weiteren vorteilhaften Ausführungsform wird ein Produkt aus Elastizitätsmodul und Querschnitt bei einer Lernfahrt bestimmt, bei der in zwei Positionen mit einem bekannten Abstand die für die Dehnung benötigte Kraft bestimmt wird. Hierdurch kann die erfindungsgemäße Lösung auch ohne vorherige Kenntnis des Elastizitätsmoduls oder Ausmessung des Querschnitts des Antriebsriemens durchgeführt werden, da für die Positionsbestimmung nur das genannte Produkt benötigt wird. Dieses ergibt sich - ausgedrückt durch die Federkonstanten $D_1$ und $D_2$ an den beiden Positionen $x_1$ und $x_2$ im Abstand $x = x_2 - x_1$, die sich aus den benötigten Kräften für die jeweiligen Messintervalle nach oben angegebener Formel ergeben - zu:

$$EA = x \, \frac{D_1 D_2}{D_1 - D_2} \; .$$

Im realen Betrieb kann man den Vorgang weitgehend automatisieren. Dazu wird zunächst eine Lernfahrt im bislang üblichen Verfahren durchgeführt. Mit einem Inkrementalgeber erhält man dabei eine exakte Information über z.B. die volle Öffnungsweite. Zusätzlich führt man in beiden Endpositionen eine Messung der Federkonstanten durch. Man erhält damit zwei Werte für die Federkonstante, und mit Kenntnis des dazwischenliegenden Weges lässt sich über das Produkt *EA* die effektive (wirksame) Länge des Riemens bestimmen. Dabei sind gleichzeitig weitere Einflussfaktoren - wie z.B. der Wirkungsgrad des Motors - mit eingerechnet.

Im Folgenden wird die Erfindung anhand des in der Figur dargestellten Ausführungsbeispiels näher beschrieben und erläutert. Die Figur zeigt:

einen Türmechanismus als beispielhaftes System.

Die Figur zeigt ein erfindungsgemäßes System aus einem Antriebsriemen 1, einer Antriebseinheit 2 und zwei mittels des Riemens 1 bewegbaren Elemente 3, die im hier gezeigten Ausführungsbeispiel als Türflügel ausgebildet sind. Um die Position der Türflügel 3 bei unbekanntem Elastizitätsmodul und Querschnitt des Antriebsriemens 1 bestimmen zu können, wird zunächst eine Lernfahrt durchgeführt, bei der das Produkt dieser Größen ermittelt wird. Hierzu wird die volle Öffnungsweite der Türen 3 mit einem Inkrementalgeber bestimmt und zudem in beiden Endpositionen die Federkonstante des Riemens 1 mittels eines Messintervalls, über das der Riemen 1 gedehnt wird, und der dafür benötigten Kraft, die man über den Wirkungsgrad des Motors 2 erhält, gemessen. Aus der Differenz der beiden Endpositionen - der Öffnungsweite - und den entsprechenden Federkonstanten kann dann das genannte Produkt berechnet werden, das vorteilhafterweise in einem nichtflüchtigen Speicher einer Steuerung des Motors 2 abgelegt wird, so dass danach durch eine einmalige Messung die Position der Türen 3 bestimmt werden kann.

Zur eigentlichen Positionsbestimmung bewegt die Steuerung den Motor 2 in kurzer Zeit über ein kleines Messintervall und bestimmt die hierfür benötigte Kraft anhand des Wirkungsgrades des Motors 2. Wichtig dabei ist, dass die träge Masse des Riemens 1 deutlich unter der der Last 3 liegt, so dass möglichst der Riemen 1 gedehnt wird, ohne dass sich dabei die Türflügel 3 bewegen. Anhand des Messintervalls und der für die Dehnung benötigten Kraft sowie dem Produkt aus Elastizitätsmodul und Querschnitt des Antriebsriemens 1 wird nun - wie weiter oben beschrieben - die wirksame Länge des Riemens 1 bestimmt. Zusammen mit der Kenntnis über die Endpositionen - die beispielsweise durch die Lernfahrt bekannt sind - ergeben sich hieraus die Positionen der Türflügel 3, so dass man weiß, ob die Türen geschlossen, geöffnet oder nur beispielsweise 10 cm offen sind. Durch die erfindungsgemäße Lösung wird somit die Elastizitätseigenschaft einer konstruktiv notwendigen Komponente genutzt, um hieraus eine Positionsinformation der Last zu gewinnen, ohne dafür zusätzliche Sensoren verwenden zu müssen.

Zusammenfassend betrifft die Erfindung ein Verfahren zur Ermittlung einer Position zumindest eines mittels eines Antriebsriemens einer Antriebseinheit bewegbaren Elementes. Die Erfindung betrifft ferner ein System aus derartigen Komponenten sowie ein Programm zur Durchführung des Verfahrens. Um eine Absolutposition des bewegbaren Elementes in einer einfachen Art und Weise zu bestimmen, wird eine Lösung vorgeschlagen, wobei der Antriebsriemen über ein Messintervall gedehnt wird und eine dafür benötigte Kraft über einen Wirkungsgrad der Antriebseinheit bestimmt wird, wobei aus dem Messintervall und der Kraft sowie einem Elastizitätsmodul und einem Querschnitt eine wirksame Länge des Antriebsriemens bestimmt wird und wobei aus der wirksamen Länge die Position bestimmt wird.

## Patentansprüche

1. Verfahren zur Ermittlung einer Position zumindest eines mittels eines Antriebsriemens (1) einer Antriebseinheit (2) bewegbaren Elementes (3), wobei der Antriebsriemen (1) über ein Messintervall gedehnt wird und eine dafür benötigte Kraft über einen Wirkungsgrad der Antriebseinheit (2) bestimmt wird, wobei aus dem Messintervall und der Kraft sowie einem Elastizitätsmodul und einem Querschnitt eine wirksame Länge des Antriebsriemens (1) bestimmt wird und wobei aus der wirksamen Länge die Position bestimmt wird.

2. Verfahren nach Anspruch 1,
wobei der Antriebsriemen (1) vorgespannt wird.

3. Verfahren nach Anspruch 1 oder 2,
wobei das bewegbare Element (3) vor der Dehnung des Antriebsriemens (1) auf eine gleichmäßige Geschwindigkeit gebracht wird.

4. Verfahren nach einem der vorhergehenden Ansprüche,
wobei ein Produkt aus Elastizitätsmodul und Querschnitt bei einer Lernfahrt bestimmt wird, bei der in zwei Positionen mit einem bekannten Abstand die für die Dehnung benötigte Kraft bestimmt wird.

5. System aus zumindest einer Antriebseinheit (2), einem Antriebsriemen (1) und einem mittels des Antriebsriemens (1) bewegbaren Element (3), wobei die Antriebseinheit (2) eine Steuerung mit Mitteln zur Durchführung eines Verfahrens nach einem der vorhergehenden Ansprüche aufweist.

6. Programm zur Durchführung eines Verfahrens nach einem der Ansprüche 1 bis 4 bei Ablauf in einer Steuerung einer Antriebseinheit (2) in einem System nach Anspruch 5.

## Claims

1. Method for determining a position of at least one element (3) which can be moved by means of a drive belt (1) of a drive unit (2), wherein the drive belt (1) is expanded over a measurement interval and a force required to do so is determined via an efficiency of the drive unit (2), wherein an effective length of the drive belt (1) is determined from the measurement interval and the force and from a modulus of elasticity and a cross-section, and wherein the position is determined from the effective length.

2. Method according to claim 1,
wherein the drive belt (1) is pretensioned.

3. Method according to claim 1 or 2,
wherein the movable element (3) is brought to a constant speed before the expansion of the drive belt (1).

4. Method according to one of the preceding claims, wherein a product of modulus of elasticity and cross-section is determined during the course of a learning run, in which the force required for the expansion is determined in two positions having a known separation.

5. System comprising at least a drive unit (2), a drive belt (1) and an element (3) that can be moved by means of the drive belt (1), wherein the drive unit (2) features a controller having means for carrying out a method as claimed in one of the preceding claims.

6. Program for carrying out a method according to one of claims 1 to 4 when it is executed in a controller of a drive unit (2) in a system according to claim 5.

## Revendications

1. Procédé de détermination d'une position d'au moins un élément ( 3 ) qui peut être déplacé au moyen d'une courroie ( 1 ) d'entraînement d'un groupe ( 2 ) d'entraînement, la courroie ( 1 ) d'entraînement étant tendue sur un intervalle de mesure et une force nécessaire à cet effet étant déterminée par un rendement ( 2 ) du groupe d'entraînement, dans lequel on détermine une longueur efficace de la courroie ( 1 ) d'entraînement, à partir de l'intervalle de mesure et de la force, ainsi que d'un module d'élasticité et d'une section transversale et dans lequel on détermine la position à partir de la longueur efficace.

2. Procédé suivant la revendication 1, dans lequel on met la courroie ( 1 ) d'entraînement sous tension préalable.

3. Procédé suivant la revendication 1 ou 2, dans lequel on met à une vitesse uniforme l'élément ( 3 ) pouvant être déplacé avant de tendre la courroie ( 1 ) d'entraînement.

4. Procédé suivant l'une des revendications précédentes, dans lequel on détermine un produit d'un module d'élasticité par une section transversale dans une course d'apprentissage, dans laquelle on détermine la force nécessaire pour la tension dans deux positions à une distance connue.

5. Système composé d'au moins un groupe ( 2 ) d'entraînement, d'une courroie ( 1 ) d'entraînement et d'un élément ( 3 ) pouvant être déplacé au moyen de la courroie ( 1 ) d'entraînement, dans lequel le groupe ( 2 ) d'entraînement a une commande ayant des moyens pour effectuer un procédé suivant l'une des revendications précédentes.

6. Programme pour effectuer un procédé suivant l'une des revendications 1 à 4, lorsqu'il se déroule dans une commande d'un groupe ( 2 ) d'entraînement dans un système suivant la revendication 5.

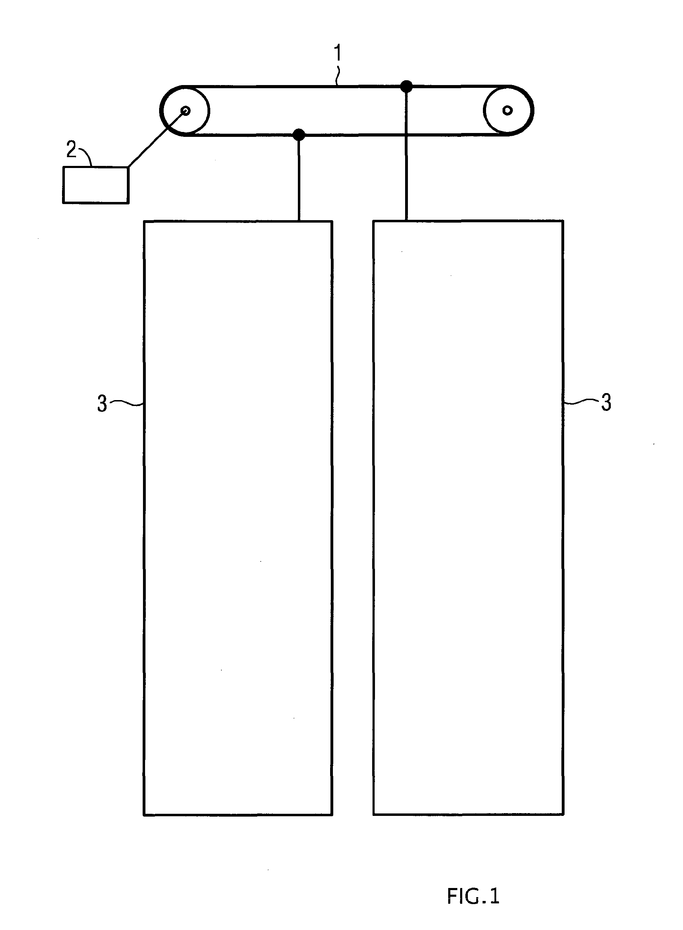

FIG.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009042800 A